# EUROPEAN PATENT APPLICATION

(11) **EP 1 633 140 A2**
(43) Date of publication of application: **08.03.2006**
(21) Application number: 05076945.4
(22) Date of filing: 24.08.2005
(51) Int. Cl.: H04N 7/10, H04N 7/16

(54) **Television system**

(30) Priority: 01.09.2004 GB 0419385
(71) Applicant: Quadriga Worldwide Limited, 389 Chiswick High Road London W4 4AL (GB)
(72) Inventor: Nwana, Hyacinth Sama, Walton-on-Thames Surrey KT12 3EP (GB); Budie, Marc Johannes Theodorus, 3403 ZT Ijsselstein (NL); Wilmot, Richard James, Cambridge, CB4 1HB (GB); Shalliker, Stephen John, Bourne End Buckinghamshire SKL8 5TT (GB)
(74) Representative: Hyden, Martin Douglas

(57) **Abstract**

A television system comprising: one or more television sets (14), each with an associated local control unit (66); and a head end unit (56) to which each local control unit is connected, the head end unit providing content for display on each television set; wherein each local control unit includes a channel map comprising a number of channels, each mapped to a television program channel or to a reference to an interactive content page; and wherein the reference to an interactive content page operates such that when selected, the local control unit contacts the head end unit for the interactive content to be displayed on the television. The channel map can be in the form of a specific channel assignment or a logical map.

## Description

This invention relates to a television system suitable for showing both program content and interactive content.

At present, interactive TV systems operate in two main modes:
1) Interactive mode - This mode typically is used by the user to navigate menus and other complex screens involving user interface;
2) "Normal TV" mode - This mode is used solely for the viewing of non-interactive TV content, such as movies or TV programming.

To access Interactive mode from Normal TV mode, the user typically selects a button on a remote control referencepad. This button can be a main menu button that navigates to a top-level menu structure, or a specialized button that navigates to a particular subset of interactive content, an electronic program guide for example.

In Normal TV mode, the user navigates through the available programming by means of either a direct numeric channel selection on a remote control referencepad, or a program increment/decrement (channel up/down) selection. The user is thus able to navigate through all programming without having to make use of the Interactive mode services at all.

The functionality detailed above is suitable for the domestic consumer market. A user typically interacts with the system on a daily basis and so grows familiar with it and Is able to make use of the advanced functionality through familiarity with the interactive menu system.

The demands of the hospitality sector (hotels, etc.) are somewhat different. A domestic consumer approach is inappropriate for the following reasons:
a. The user is a guest, and as such is exposed to the system for only a limited period in which to learn the operation of the system and the services on offer.
b. The sector is revenue-based. Services for which the operator can make a charge must be as accessible to the user as possible. Burying services deep within a menu structure will not increase exposure and subsequent purchase.
c. Advertising and other dynamic promotional content is not typically visible to the user outside of Interactive mode.
d. A user in search of a simple TV service would be unlikely to take the time or make the effort to enter Interactive mode, thus premium services will go unseen.

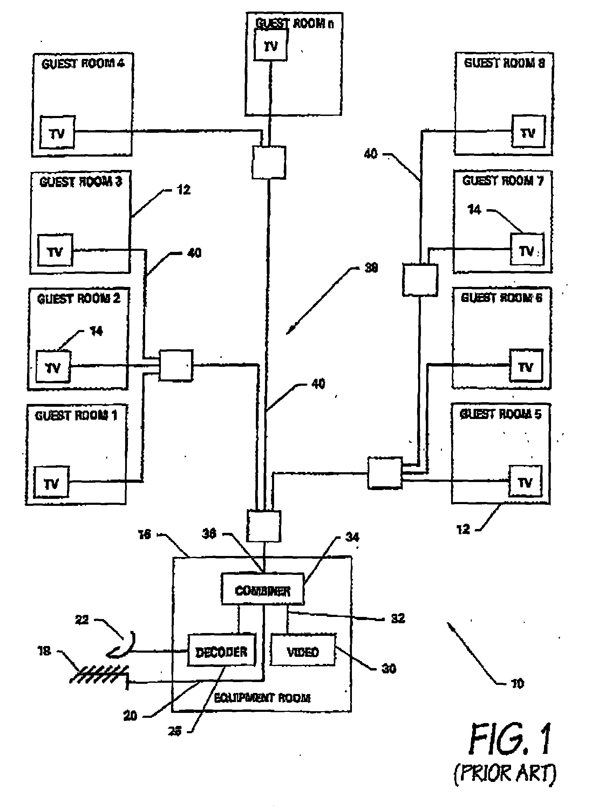

A typical hospitality sector TV system is shown schematically in Figure 1 and comprises a system implemented in a conventional hotel 10 having a number of guest rooms 12, each provided with a television set 14. The hotel 10 also has an equipment room 16 which is fed with analogue terrestrial television signals from an aerial 18 and also with digital satellite television signals from a satellite dish 22. A satellite television decoder 26, supplies analogue television signals for different programmes ("SAT1","SAT2"and"SAT3") on different frequency multiplexed channels (channels 1,2 and 3). The analogue terrestrial television signals contain different programmes ("TERR1","TERR2"and"TERR3") on the different frequency multiplexed channels (channels 4,5 and 6) on which those signals were broadcast.

The equipment room 16 also contains video replay equipment 30, such as a video tape player or DVD player, digital playout server or equivalent and any other digital delivery mechanism, which provides analogue video signals for different programmes ("VID1", "VID2" and "VID3") on further different frequency-multiplexed channels (channels 7, 8 and 9). The outputs of the aerial, satellite decoder and video replay equipment are connected to a combiner 34, which provides a frequency multiplexed output 36 having all nine programmes on the nine channels 1 to 9. The output 36 is connected to the aerial inputs of all of the televisions 14 by coaxial cable 40 network, possibly including passive splitters 42 and active distribution amplifiers 44 to ensure a sufficient signal level for each of the televisions 14. Each television 14 includes a tuner connected to the aerial input 46. The tuner is set to receive the nine channels and can be adjusted by the user to select the particular channel to be viewed.

Digital version of such a system can also be provided. Examples of these are described in WO 02/065705 and WO 02/065771. In such system a head-end server is provided in the equipment room which serves to collect the various inputs and provide them to the network in digital form addressed to each room. A local control unit (LCU) is provided in each room to receive the video stream addressed to that room 12, decode it, and supply the resulting analogue video and audio signals to the television 14. Each LCU is also operable to send requests over the network to the server, for example to activate the service or to control media or content provided to the TV. Thus the LCU will communicate with the HES when switching between Normal and Interactive operation in response to signals from the remote control unit.

The present invention aims to provide a system that avoids some or all of the problems associated with providing both Normal and Interactive functions in a television system, especially in a hospitality environment.

The invention addresses these problems by providing a channel map In which each channel provides either normal channel information or interactive functions

A first aspect of the invention provides a television system comprising: one or more television sets, each with an associated local control unit; and a head end unit to which each local control unit Is connected, the head end unit providing content for display on each television set; wherein each local control unit includes a channel map comprising a number of channels, each mapped to a television program channel or to a reference to an interactive content page; and wherein the reference to an interactive content page operates such that when selected, the local control unit contacts the head end unit for the interactive content to be displayed on the television.

By including references to interactive functions in the channel map, the necessity to select a separate interactive mode is avoided.

The head end unit preferably instructs the local control unit to navigate to a particular HTML page to provide the complete interactive function to the user.

In a particularly preferred version of the invention, the channel map is a logical map, each television channel comprising parameters required to tune the television to a particular channel; and each reference comprising a URL for specific interactive content to be displayed on the television.

In this version, selection of a channel for interactive content can operate such that the local control unit instructs the television to display a web browser and navigate to a specific URL.

Thus, a typical channel map will comprise a list of parameters required to tune the television to different frequencies and a list of URLs for interactive items. The members of these lists will have a number in the channel map assigned such that selection of that channel can be made by either entering the specific number or using a channel increment/decrement command.

Preferably, the head end unit periodically refreshes the channel map in the local control unit.

The invention will now be described with reference to the accompanying drawings, in which:
Figure 1 shows a schematic view of a prior art system; and
Figure 2 shows an example of a system according to the invention.

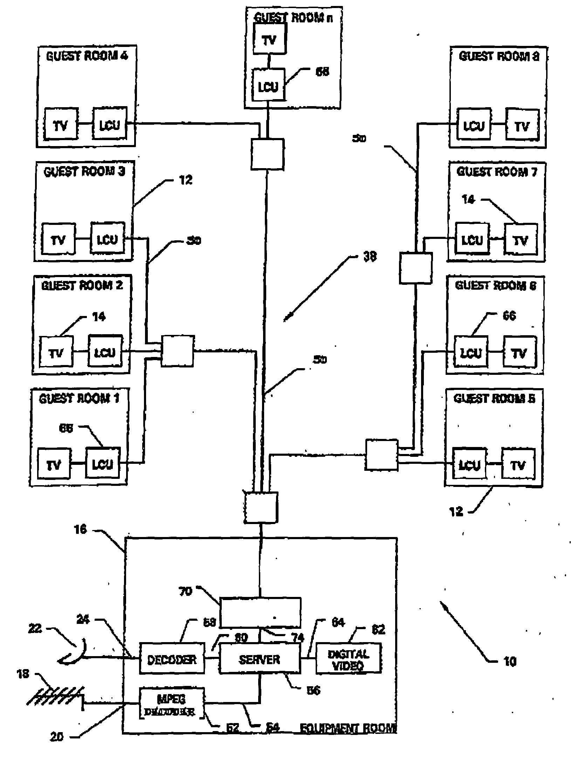

Referring now to Figure 2, the TV system comprises a switched point-to-point digital distribution network 50. In the equipment room 16, the downlead 20 from the terrestrial television aerial 18 feeds a receiver and MPEG decoder 52 which provides digital MPEG video streams 54 for the received terrestrial television programmes to a head end server 56 (although one server 56 has been shown in the drawing, several such servers may be employed). Also, the downlead 24 from the satellite dish 22 feeds a decoder/descrambler 58 which provides digital MPEG video streams 60 for the received satellite television programmes to the server 56. Furthermore, the video replay equipment 62 has a digital output and provides digital MPEG video streams 64 for the video programmes to the server 56. The server 56 selects which of the video streams is to be transmitted to which room 12, and places the selected video streams on the digital network 50 (via a suitable system 70 for providing wired or wireless IP transport networks, e.g. cable modem, CAT5, etc.), each addressed to the selected room 12. In each room 12, the television 14 is connected to the network 50 by a local control unit (LCU) 66 that receives the video stream addressed to that room 12, decodes it, and supplies the resulting analogue video and audio signals to the television 14. Each LCU 66 is also operable to send requests over the network38 to the server 56, for example to change the television/video channel supplied to that LCU 66. TV systems such as this are described in more detail in WO 02/065705 and WO 02/065771 and need not be described in further detail here.

In a first version of the invention, the TV 14 has a physical channel map (of which the LCU 66 is aware) comprising a list of channel assignments. These can be either a fixed program channel or a reference for an Interactive menu item. The user moves between channels in the usual way for normal TV operation, either by selecting a specific channel number or by using channel increment/decrement controls. Such commands are typically entered using a remote control unit.

Table 1 below shows a typical channel assignment for this version:

**Table 1**

| **Program number** | **Program Name** | **Interactive Item** |
|---|---|---|
| 1 | BBC1 | |
| 2 | BBC News 24 | |
| 3 | | Main Menu |
| 4 | CNN | |
| 5 | | Express check-out |
| 6 | Sky One | |
| 7 | | Video on demand selection |
| 8 | ITN | |
| 9 | | Wake-up service |
| 10 | | Personalized advertising |

Using this setup, selecting program 3 is effectively the same as selecting the Interactive mode for operation of the TV and gives access to all interactive content in the usual manner. However, selecting program 5, for example, gives immediate access to an express checkout function without the need to go to a main menu and navigate through the various menu layers to reach the desired function. By inserting specific interactive items in the channel assignment, it is possible to place these added-value Items in front of a user without the need for an interactive mode to be specifically selected.

This approach works by inserting a reference into the channel map at the given location that instructs the LCU 66 to refer to the head end server (HES) 56 when that channel is selected. The reference enables or actions the LCU 66 to process the HES 56 for Instructions. On receipt of this request from the LCU 66 to navigate to a particular HTML (web) page. This HTML page Is held on the HES 56. The HTML web pages are thus available to the user alongside the regular TV channels in the program lineup.

A naive user of this system can merely scan up and down the channel list to find the desired TV program or Interactive service without the need to switch between normal and interactive modes. As a user becomes more experienced, it becomes possible to go directly to the desired channel or Interactive service by entering the desired channel number.

In this first version of the invention, a binary NVRAM image is uploaded to the TV, and the channel is selected by selecting a program index. A separate NVRAM Image is required for each type of TV in an installation. The LCU 66 is aware of channel map included in this image and processes instructions accordingly.

As is described above, this version of the invention relies on the HES 56 instructing the LCU 66 to navigate to the appropriate HMTL page. This requires a number of communications between the LCU 66 and the HES 56 before the page is displayed on the TV. A second version of the invention provides a system that uses fewer communications between the LCU 66 and the HES 56.

The second version of the invention uses a logical channel map. In this case, Instead of either tuning to a fixed channel assignment or referring to the HES 56 for instructions, each entry in the channel map is a logical entry. For an analogue TV channel the list entry is the Instruction for the TV to tune to a specific frequency; for an interactive item, the list entry is a Uniform Resource Location (URL).

Table 2 below shows the channel table corresponding to the assignments of Table 1 but implemented according to this second version of the invention:

| **Program number** | **Channel** | **URL** |
|---|---|---|
| 1 | 4625000Hz, PAL,"BBC1" | |
| 2 | 46S0000Hz, PAL, "News 24" | |
| 3 | | http://192.168.200,1/mainmenu.html (Main Menu) |
| 4 | 4675000Hz, PAL, "CNN" | |
| 5 | | http://192.168.200.1/expresscheckout.html (Express check-out) |
| 6 | 4800000Hz, PAL, "Sky One" | |
| 7 | | http://192.168.200.1/vodselection.html (Video on demand selection) |
| 8 | 4825000Hz, PAL, "ITN" | |
| 9 | | http://192.168.200.1/wakeup.html (Wake-up service) |
| 10 | | http://192.168.200.1/persadvert.html (Personalized advertising) |

### Table 2

As can be seen, the map contains logical instructions. These are easily programmed into the LCU 66. Consequently, the channel assignments are easily updated from the HES 56 which can act to reprogram the channel assignments in the map as desired by the system operator. The channel map can therefore be easily customised for an individual user using data obtained from previous stays at a hotel, other associated hotels in a group and/or user-provided data.

Because the channel map is a logical Item, all content can be presented in a program channel format, interactive or not, irrespective of the TV type in use. This avoids the need to update and redistribute NVRAM images. This also means that It Is possible to have dynamic content and channel maps, with user-specific URLs for interactive services, such as targeted advertising.

The benefits of the systems according to the invention are several:
a. The user does not have to press a specific key to enter Interactive mode;
b. The user does not have to learn the menu layout or follow confusing instructions to navigate down to lower levels of the menu system. Rather, pages are presented as the user scans through the available channels;
c. The user will still be exposed to opportunities to purchase premium revenue-earning content without explicitly entering Interactive mode.
d. The user may be exposed to advertising and promotional content that could change dynamically, and be targeted individually, reflecting previous purchase choices if required, In a manner far more flexible than current video-only systems.
e. The user can exit Interactive mode by simply pressing the channel increment/decrement key.
f. The TV behaves like a regular TV as far as a naive user concerned.

Various changes can be made to the implementation of the systems without departing from the scope of the invention.

## Claims

1. A television system comprising: one or more television sets, each with an associated local control unit; and a head end unit to which each local control unit Is connected, the head end unit providing content for display on each television set; wherein each local control unit includes a channel map comprising a number of channels, each mapped to a television program channel or to a reference to an interactive content page; and wherein the reference to an interactive content page operates such that when selected, the local control unit contacts the head end unit for the interactive content to be displayed on the television.

2. A system as claimed in claim 1., wherein the head end unit instructs the local control unit to navigate to a particular HTML page to provide the compete interactive function to the user.

3. A system as claimed in claim 1 or 2, wherein the channel map is a logical map, each television channel comprising parameters required to tune the television to a particular channel; and each reference comprising a URL for specific Interactive content to be displayed on the television.

4. A system as claimed in claim 3, wherein selection of a channel for Interactive content can operate such that the local control unit instructs the television to display a web browser and navigate to a specific URL.

5. A system as claimed in claim 3 or 4, wherein the channel map will comprise a list of parameters required to tune the television to different frequencies and a list of URLs for interactive items.

6. A system as claimed In claim 5, wherein each member of the list has a number In the channel map assigned such that selection of that channel can be made by either entering the specific number or using a channel increment/decrement command.

7. A system as claimed In any preceding claim, the head end unit periodically refreshes the channel map in the local control unit.

8. A system as claimed in any preceding claim, comprising multiple TV sets of different makes.

9. A system as claimed in claim 8, wherein a separate binary NVRAM image is uploaded for each make of TV set.

10. A television system substantially as herein described.
